# EUROPÄISCHE PATENTANMELDUNG

(11) **EP 2 508 376 A1**
(43) Veröffentlichungstag der Anmeldung: **10.10.2012**
(21) Anmeldenummer: 12163112.1
(22) Anmeldetag: 04.04.2012
(51) Int. Cl.: B60J 7/00

(54) **Rollobaueinheit für ein Kraftfahrzeug**

(30) Priorität: 07.04.2011 DE 102011007004
(71) Anmelder: BOS GmbH & Co. KG, 73760 Ostfildern (DE)
(72) Erfinder: Zeo, Gwenole, 73760 Ruit (DE); Renz, Günther, 71254 Ditzingen (DE)
(74) Vertreter: Patentanwälte Ruff, Wilhelm, Beier, Dauster & Partner

(57) **Zusammenfassung**

Die Erfindung betrifft eine Rollobaueinheit für ein Kraftfahrzeug mit einer drehbar gelagerten Wickelwelle (60), einem flexiblen Flächengebilde, welches in einer Staulage auf der Wickelwelle (60) aufgewickelt ist und zur Erreichung einer Funktionslage von der Wickelwelle in einer Längsrichtung abwickelbar ist und welches an seinen Seitenkanten Gleitelemente aufweist, zwei in Längsrichtung erstreckte Führungsschienen zur Führung der an den Seitenkanten des Flächengebildes vorgesehenen Gleitelemente und einem Rahmen (30a), wobei die Führungsschienen in variablem Querabstand am Rahmen (30a) befestigbar sind, um hierdurch in einem gewünschten Abstand zueinander dauerhaft fixiert zu werden.

Es ist vorgesehen, dass ein starres Führungsrohr (90a, 90b) für einen darin geführten Antriebsstrang vom Rahmen (30, 30a, 30b) zur Führungsschiene oder zu einem an der Führungsschiene ortsfesten Zuführabschnitt (80) verläuft und dass eine erste Festlegungseinrichtung (54) vorgesehen ist, mittels derer die Festlegung des Führungsrohrs (90a, 90b) ortsfest zum Rahmen (30, 30a, 30b) in variablen Stellungen bezogen auf die Querrichtung (2) möglich ist.

## Beschreibung

Die Erfindung betrifft eine Rollobaueinheit für ein Kraftfahrzeug mit einer drehbar gelagerten Wickelwelle, einem flexiblen Flächengebilde, welches in einer Staulage auf der Wickelwelle aufgewickelt ist und zur Erreichung einer Funktionslage in einer Längsrichtung abwickelbar ist und welches an seinen Seitenkanten Gleitelemente aufweist, zwei in Längsrichtung erstreckte Führungsschienen zur Führung der an den Seitenkanten des Flächengebildes vorgesehenen Gleitelemente und einem Rahmen. Dabei sind die Führungsschienen dafür vorgesehen in variablem Querabstand am Rahmen befestigbar zu sein um durch diese Befestigung einen gewünschten Abstand dauerhaft fixieren zu können.

Rollobaueinheiten finden in Kraftfahrzeugen für verschiedene Zwecke Anwendung. Sie können insbesondere als Laderaumabdeckungen, als Trennnetze oder als Beschattungsrollos ausgebildet sein. Die genannten Beschattungsrollos können dabei sowohl an im Wesentlichen vertikal ausgerichteten Fensterflächen als auch an im Wesentlichen horizontalen Fensterflächen, insbesondere Dachfenstern, Verwendung finden.

Nicht ausschließlich, jedoch insbesondere bei den genannten Dachfenstern, ist es von großer Bedeutung, dass das Flächengebilde in seiner Funktionslage nicht in inakzeptablem Maße durchhängt. Dies ist aufgrund nicht immer einheitlicher Materialeigenschaften des Flächengebildes jedoch zu befürchten, wenn die das Flächengebilde seitlich führenden Führungsschienen in einem festen Abstand zueinander montiert werden und somit für alle Rollobaueinheiten des gleichen Typs im gleichen Maße beabstandet sind.

Gattungsgemäße Rollobaueinheiten wirken dem entgegen, indem sie zwei Führungsschienen aufweisen, die in variablem Abstand an dem Rahmen befestigt werden können. So ist es möglich, bei geringfügig voneinander abweichenden Materialeigenschaften oder Zuschnittsgrößen des Flächengebildes durch eine angepasste Beabstandung der Führungsschienen dennoch ein zumindest im Wesentlichen übereinstimmendes Durchhängen des Flächengebildes in geringem und akzeptablen Maße für baugleiche Rollobaueinheiten zu gewährleisten. Diese Anpassung wird im Zuge der Montage und üblicherweise vor der Auslieferung der Rollobaueinheit an den Fahrzeughersteller vorgenommen.

Bei in Kraftfahrzeugen verbauten Rollobaueinheiten finden üblicherweise Elektromotoren Anwendung, um das Flächengebilde zwischen seiner Staulage und seiner Funktionslage zu verfahren. Zur Kraftübertragung von dem üblicherweise nur einen Elektromotor, der das Flächengebilde beidseitig kraftbeaufschlagt, kann ein zur Übertragung von Zug- und Druckkräften ausgebildeter Antriebsstrang Verwendung finden, der in einem Führungsrohr von der Antriebseinrichtung zu der jeweiligen Führungsschiene geführt ist. Allerdings hat sich gezeigt, dass es problematisch ist, die einwandfreie Funktionsweise einer gattungsgemäßen Rollobaueinheit mit solchen Antriebssträngen und Führungsrohren zu gewährleisten, wenn die Führungsschiene in Querrichtung variabel beabstandet sein können. Weiterhin hat sich gezeigt, dass an den Führungsschienen angebrachte Zuführabschnitte für die Gleitelemente des Flächengebildes oder aber für den Antriebsstrang, welche aufgrund der variablen Beabstandung der Führungsschienen lediglich mit diesen Führungsschienen und nicht mit dem Rahmen direkt verbunden sind, bei der durch den Antriebsstrang ausgeübten Kraftwirkung trotz ihrer Anbringung an die jeweilige Führungsschiene sich gegenüber dieser bewegen und dadurch eine Fehlfunktion der Rollobaueinheit bewirken können.

### Aufgabe und Lösung

Aufgabe der Erfindung ist es, eine gattungsgemäße Rollobaueinheit dahingehend weiterzubilden, dass diese bei gleichzeitiger Erreichung einer möglichst einfachen Montage eine hohe Zuverlässigkeit aufweist.

Erfindungsgemäß wird dies gemäß einem ersten Aspekt der Erfindung dadurch erreicht, dass ein starres Führungsrohr für einen darin geführten Antriebsstrang vom Rahmen zur Führungsschiene oder zu einem an der Führungsschiene ortsfest vorgesehenen Führungsabschnitt verläuft und dass eine erste Festlegungseinrichtung vorgesehen ist, mittels derer die Festlegung des rahmenseitigen Endes des Führungsrohrs ortsfest zum Rahmen in variablen Stellungen bezogen auf die Querrichtung möglich ist.

Bei einer erfindungsgemäßen Gestaltung ist somit vorgesehen, dass ein Führungsrohr, in welchem ein Antriebsstrang geführt ist, sich vom Rahmen zu mindestens einer der in Querrichtung variabel beabstandbaren Führungsschienen erstreckt, wobei die Besonderheit in der Anbringung dieses Führungsrohrs am Rahmen liegt. Der Begriff des Antriebsstrangs ist nicht als beschränkt auf den Zweck des durch einen Motor bewirkten Antriebs zu sehen. Auch Stränge, die der Synchronisierung der Bewegung zweier Seiten einer Auszugstange dienen, werden als Antriebsstränge im Sinne der Erfindung verstanden.

Als Rahmen im Sinne der Erfindung werden all jene Bauteile der Rollobaueinheit angesehen, die zueinander unabhängig von der Beabstandung der Führungsschienen ortsfest sind, insbesondere auch eine rahmenseitige Antriebseinrichtung oder Synchronisierungseinrichtung. Am Rahmen sind die Führungsschienen in variabler Querbeabstandung angebracht. Im einfachsten Falle umfasst der Rahmen einen einfachen Querträger, der die Führungsschienen miteinander verbindet und dadurch deren Beabstandung festlegt.

Aufgrund der variablen Relativposition der Führungsschienen zum Rahmen, ist eine nichtvariable Relativposition des rahmenseitigen Endes des Führungsrohrs am Rahmen nachteilig. Daher ist die erfindungsgemäß vorgesehene und die Ortsfestigkeit des Führungsrohrs zum Rahmen gewährleistende Festlegungseinrichtung dafür ausgebildet, diese relative Ortsfestigkeit in variabel auswählbaren Positionen zu gestatten. Der in Querrichtung zwischen zwei typgleichen Rollobaueinheiten möglicherweise voneinander abweichende Abstand zwischen der Führungsschiene einerseits und der rahmenseitig vorgesehenen Festlegungseinrichtung, insbesondere einer Antriebseinrichtung, andererseits wird somit dadurch kompensiert, dass das Rohr nicht in nur einer fest vorgegebenen Stellung am Rahmen anbringbar ist. Somit entfällt auch die Notwendigkeit, mehrere verschiedene Führungsrohrtypen vorzusehen, die in Abhängigkeit der Relativlage der jeweiligen Führungsschiene zum Rahmen Verwendung finden. Die erste Festlegungseinrichtung ist vorzugsweise so ausgebildet, dass sie eine vorzugsweise um mindestens 3 mm, insbesondere vorzugsweise um mindestens 6 mm variable Relativstellung des Führungsrohrs gegenüber dem Rahmen in Querrichtung gestattet.

Die erste Festlegungseinrichtung ist vorzugsweise an einer am Rahmen vorgesehenen Antriebseinrichtung vorgesehen. Diese ist zur translativen Bewegung des Antriebsstrangs ausgebildet, welcher sich von der Antriebseinrichtung bis in eine der Führungsschienen erstreckt und mittels dessen das Flächengebilde aus der Staustellung in die Funktionsstellung überführt werden kann. Diese Antriebseinrichtung ist als Teil des Rahmens in definierter Position zu den anderen Rahmenbauteilen vorgesehen. Der Abstand zwischen der Antriebseinrichtung und zumindest einer der Führungsschienen ist in Abhängigkeit davon variabel, wie die Führungsschienen voneinander beanstandet sind. Die am Rahmen vorgesehene Antriebseinrichtung ist vorzugsweise zur Kraftbeaufschlagung zumindest einer Seitenkante des Flächengebildes mittels des Antriebstrangs ausgebildet ist, vorzugsweise jedoch zur Kraftbeaufschlagung beider Seiten des Flächengebildes.

Ebenfalls denkbar ist es, dass statt einer Antriebseinrichtung eine Synchronisierungseinrichtung vorgesehen ist, die zwei Antriebsstränge, die in zwei Führungsrohren von den beiden Führungsschienen bis zur Synchronisierungseinrichtung geführt sind, miteinander synchronisiert. Dies ist insbesondere bei manuell angetriebenen Rollos zweckmäßig, um ein Verkanten zu vermeiden.

Die rahmenseitige Anbringung des Führungsrohrs, insbesondere an der Antriebseinrichtung, kann stufenlos variabel sein, beispielsweise dadurch, dass das Führungsrohr mittels einer Pressverbindung rahmenseitig gehalten wird. Eine stufenlose Einstellbarkeit kann beispielsweise auch über eine gekonterte Schraubverbindung gebildet werden.

Als vorteilhaft wird es jedoch angesehen, wenn die erste Festlegungseinrichtung zur Festlegung des Führungsrohrs in einer von mehreren diskreten Stellungen ausgebildet ist. Hierbei handelt es sich vorzugsweise um diskrete Stellungen, die voneinander um weniger als 2 mm beabstandet sind. Die Ausgestaltung mit diskreten Stellungen zur Festlegung des Führungsrohrs am Rahmen, insbesondere an der Antriebseinrichtung, hat sich in der Praxis im Hinblick auf der einwandfreien Funktionsweise der Rollobaueinheit als ausreichend herausgestellt und ist bezüglich eines einfachen Montagevorgangs besonders vorteilhaft realisierbar.

Eine solche einfache Gestaltung kann beispielsweise darin liegen, dass ein rahmenseitiges Ende des Führungsrohrs eine Querschnittsänderung aufweist, insbesondere in Form einer Aufweitung des Querschnitts, wobei rahmenseitig eine Rohraufnahme für das Führungsrohr vorgesehen ist, die eine Mehrzahl von voneinander in Querrichtung der Rollobaueinheit beabstandeten Abschnitten mit an die Querschnittsänderung des Führungsrohrs angepasster Formgebung zur Festlegung des Führungsrohrs im Bereich der Querschnittsänderung aufweist. Auf diese Art und Weise wird bezogen auf die Querrichtung ein Formschluss hergestellt, der einer ungewollten Verlagerung des Führungsrohrs gegenüber dem Rahmen entgegenwirkt. Ein solcher Formschluss ist gerade im Hinblick auf eine über Jahre beizubehaltende Relativstellung sehr von Vorteil. Die Gestaltung mit einer am Führungsrohr vorgesehenen Querschnittsänderung, die in Eingriff mit einem von mehreren daran angepassten Abschnitten am Rahmen, insbesondere an einem Gehäuse der Antriebseinrichtung, angebracht wird, ist besonders einfach zu montieren. Als gegenüber der beschriebenen Ausgestaltung nachteilig, jedoch auch möglich, wird eine Gestaltung angesehen, bei der mehrere Querschnittsänderungen am Führungsrohr vorgesehen sind, insbesondere Einschnürungen, die mit einem oder mehreren daran angepassten Stegen am Rahmen in Eingriff gebracht werden können. Auch hierdurch ist die variable Positionierung bei einfacher Montage erzielbar.

Im Hinblick auf die Montage weiterhin von Vorteil ist es, wenn die genannte Rohraufnahme zwei Halbschalen zur Aufnahme des rahmenseitigen Endes des Führungsrohrs aufweist, wobei die Halbschalen das Führungsrohr im montierten Zustand umfänglich umgeben und wobei der Abschnitt bzw. die Abschnitte mit an die Querschnittsänderung des Führungsrohrs angepasster Formgebung an einer oder an beiden Halbschalen vorgesehen sind. Dabei ist es insbesondere von Vorteil, wenn die Halbschalen bzw. Gehäuseteile, an denen die Halbschalen vorgesehen sind, Verbindungsmittel zur Herstellung einer Schnappverbindung aufweisen.

Die Gestaltung mit Halbschalen erlaubt eine sehr einfache Montage. Das Führungsrohr wird in der gewünschten und an die konkrete Rollobaueinheit angepassten Relativposition in eine der Halbschalen eingelegt, insbesondere vorzugsweise in eine Halbschale die eine entsprechend an die Querschnittsänderung des Führungsrohrs angepasste Formgebung aufweist, und es wird anschließend die zweite Halbschale angebracht, sodass das Führungsrohr umfänglich von den Halbschalen umgeben ist und somit orthogonal zur Querrichtung nicht mehr aus der angepassten Formgebung mindestens einer der Halbschalen entweichen kann. Er ist dann dauerhaft gesichert. Um diesen Montageschritt möglichst einfach zu gestalten sind die Halbschalen vorzugsweise mittels der genannten Schnappverbindung verbunden, sodass sie nicht mehr ohne Weiteres trennbar sind.

Gemäß einem weiteren Aspekt der Erfindung ist vorgesehen, dass den Führungsschienen jeweils ein als separates Bauteil vorgesehener Zuführabschnitt zugeordnet ist, wobei die Zuführabschnitte jeweils eine Einlauföffnung für die Gleitelemente und/oder eine Einlauföffnung für den jeweiligen Antriebsstrang aufweisen. Dabei sind die Zuführabschnitte derart mit den Führungsschienen verbunden, dass sie gemeinsam mit den Führungsschienen gegeneinander einen variablen Querabstand einnehmen. Weiterhin sind erfindungsgemäß zusammenwirkende zweite Festlegungsmittel jeweils am Einlaufabschnitt und am Rahmen vorgesehen, die eine Fixierung des Einlaufabschnitts in variabler Position am Rahmen gestatten und dabei eine Verdrehsicherung der Zuführabschnitte gegenüber dem Rahmen bewirken.

Gemäß diesem zweiten Aspekt der Erfindung, der vorzugsweise gemeinsam mit dem oben erläuterten ersten Aspekt der Erfindung realisiert ist, sind als Einlaufabschnitte ausgebildete Zuführabschnitte an beiden Führungsschienen vorgesehen, die gemeinsam mit den Führungsschienen variabel beabstandet werden, um eine einheitliche Anmutung des Flächengebildes in seiner Funktionslage zu gewährleisten. Es hat sich jedoch gezeigt, dass die Anbringung dieser Zuführabschnitte lediglich an den Führungsschienen und somit nur mittelbar am Rahmen den Nachteil ausweist, dass die Zuführabschnitte im Zuge der bei der Bewegung des Flächengebildes auf das Führungsrohr und den Antriebsstrang wirkenden Kräfte verkantet. Erfindungsgemäß ist deshalb vorgesehen, dass die Zuführabschnitte mittels zweiter Festlegungsmittel auch am Rahmen befestigt sind. Hierdurch kann bei entsprechender Ausgestaltung der zweiten Festlegungsmittel erreicht werden, dass die Zuführabschnitte zuverlässig ihre während der Montage eingestellte Beabstandung beibehalten und dadurch die einwandfreie Funktionsweise der Rollobaueinheit gewährleisten.

Zur Festlegung am Rahmen ist als Teil der zweiten Festlegungsmittel vorzugsweise mindestens ein Langloch am Zuführabschnitt oder am Rahmen vorgesehen, welches in Querrichtung erstreckt ist und dadurch die variable Anbringung des Zuführabschnittes am Rahmen ermöglicht. Von besonderem Vorteil ist es, wenn zur Erzielung der Verdrehsicherung, also zur Verhinderung einer ungewollten Bewegung des Zuführabschnitts um eine im Wesentlichen orthogonal zum Flächengebilde ausgerichteten Achse, das zweite Festigungsmittel formschlüssige zusammenwirkende Verbindungsmittel am Zuführabschnitt und am Rahmen verfügt, die im montiertem Zustand des Zuführabschnitts ineinandergreifen. Diese formschlüssigen Verbindungsmittel umfassen vorzugsweise Rastrippen.

Somit ist die bei Langlöchern verbleibende Gefahr, dass der hierdurch festgelegte Zuführabschnitt sich verdreht, deutlich reduziert. Die genannten Rastrippen, die vorzugsweise in Längsrichtung ausgerichtet sind, verhindern durch ihren Eingriff miteinander, dass eine Drehbewegung des Zuführabschnitts gegenüber dem Rahmen möglich ist. Durch eine vorzugsweise zusätzlich vorgesehene Verschraubung wird verhindert, dass die Rastrippen am Zuführabschnitt und am Rahmen außer Eingriff gelangen.

Die Erfindung betrifft weiterhin auch ein Fahrzeug mit einer Rollobaueinheit, wobei die Rollobaueinheit nach vorstehend beschriebener Art ausgebildet ist.

### Kurzbeschreibung der Zeichnungen

Weitere Vorteile und Aspekte der Erfindung ergeben sich außer aus den Ansprüchen auch aus der nachfolgenden Beschreibung eines bevorzugten Ausführungsbeispiels der Erfindung, welches anhand der Figuren erläutert wird. Dabei zeigen:
- Fig. 1: eine erfindungsgemäße Rollobaueinheit im montiertem Zustand,
- Fig. 1a und 1 b: Details der montierten Rollobaueinheit gemäß Fig. 1,
- Fig. 2, 2a und 2b: eine Basisbaugruppe der Rollobaueinheit mit einem Teil des Rahmens, einer Antriebseinrichtung und einer Wickelwelle sowie Detaildarstellungen hierzu,
- Fig. 3a und 3b: die Ergänzung der Basisbaugruppe um für die Rollobaueinheit spezifisch variabel anzubringende Bauteile und
- Fig. 4a bis 6b: die Positionierung der variabel anbringbaren Bauteile an die Basisbaugruppe.

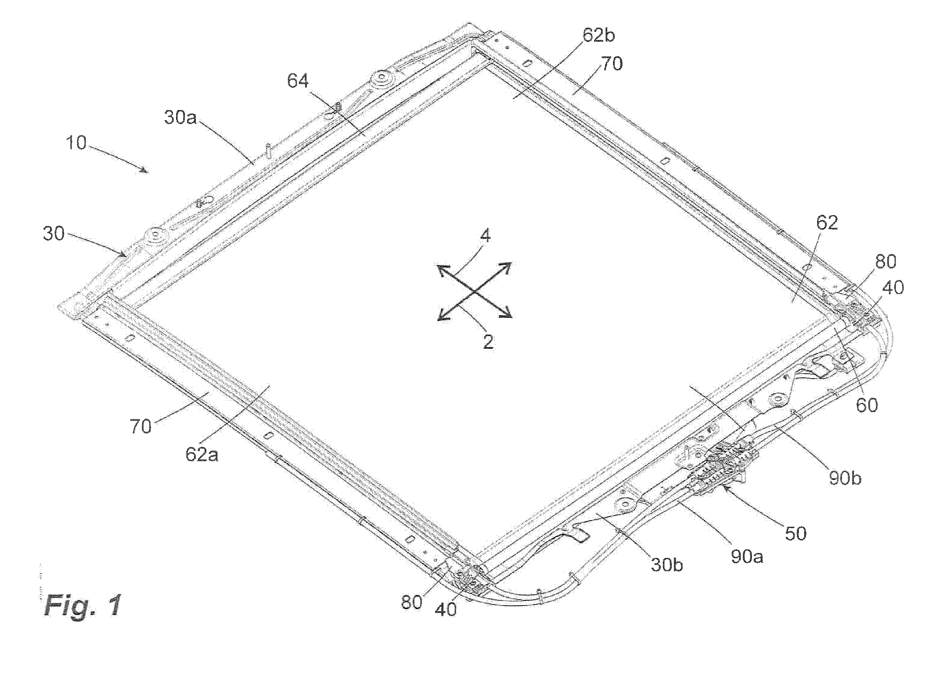

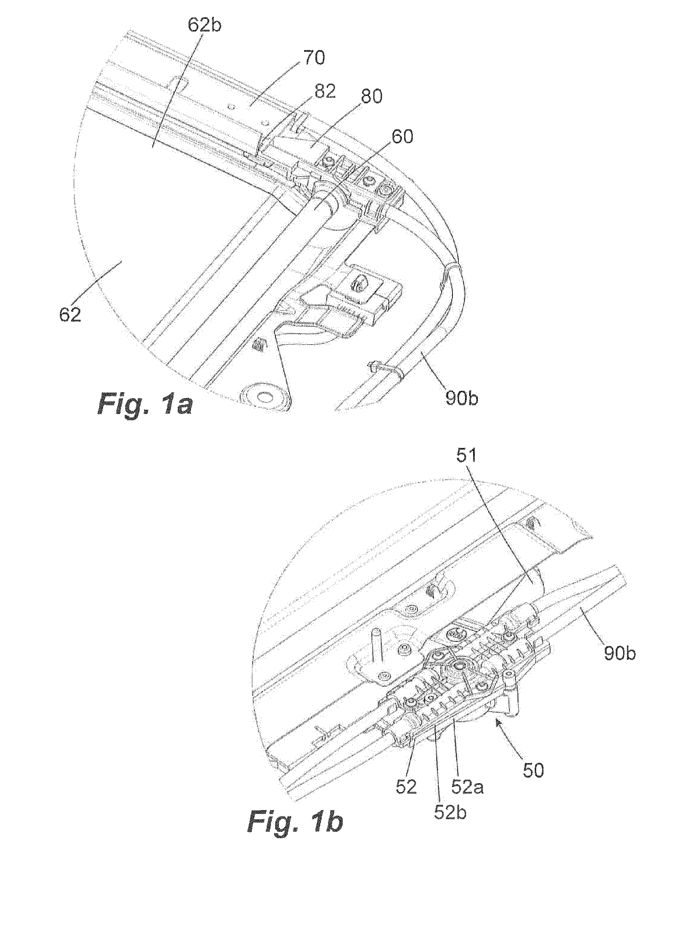

Die Fig. 1, 1a und 1b zeigen eine erfindungsgemäße Rollobaueinheit 10. Diese ist vorliegend zum Zwecke der Beschattung und zu diesem Zweck zum Einbau in einem Glasdach eines Fahrzeugs vorgesehen. Vergleichbar ausgestaltete Rollobaueinheiten können jedoch auch zu anderen Zwecken in Fahrzeugen Verwendung finden, beispielsweise als Laderaumabdeckungen.

Die erfindungsgemäße Rollobaueinheit 10 verfügt über einen Rahmen 30 mit zwei sich in Fahrzeugquerrichtung erstreckenden Querträgern 30a, 30b. An den jeweils äußeren Enden sind an den Querträgern 30a, 30b Führungsschienen 70 angebracht, die sich in Fahrzeuglängsrichtung 4 erstrecken. Am Querträger 30b sind darüber hinaus Lagerblöcke 40 vorgesehen, mittels derer eine Wickelwelle 60 um eine in Fahrzeugquerrichtung 2 erstreckte Drehachse drehbar gelagert ist. Die Wickelwelle 60 ist zur Aufnahme eines Flächengebildes 62 vorgesehen, elches in Längsrichtung 4 entlang der Führungsschienen ausziehbar ist. Hierzu ist am distalen Ende des Flächengebildes 62 eine Auszugsstange 64 vorgesehen. Weiterhin sind an den Seitenkanten 62a, 62b des Flächengebildes jeweils Gleitbänder angebracht, die in nicht näher dargestellter Weise durch eine korrespondierend geformte Ausnehmung in den Führungsschienen 70 in dieser in Längsrichtung 4 verlagerbar sind. Zur automatisierten Verlagerung des Flächengebildes 62 zwischen einer Staulage, in der das Flächengebilde 62 weitgehend vollständig auf der Wickelwelle 60 aufgewickelt ist, und der in Fig. 1 dargestellten Funktionslage, in der das Flächengebilde 62 zumindest zum überwiegenden Teil von der Wickelwelle 60 abgewickelt ist, ist eine Antriebseinrichtung 50 vorgesehen, welche ortsfest am Querträger 30b angebracht ist. Von dieser Antriebseinrichtung 50 verlaufen in sich starre Rohrabschnitte 90a, 90b zu Zuführabschnitten 80, welche an den bezogen auf die Perspektive der Fig. 1 rechtsseitigen Enden der Führungsschienen 70 angebracht sind und zu diesen ungeachtet von deren Beabstandung zueinander jeweils ortsfest verbleiben sollen.

Durch Bestromung eines Elektromotors 51 der Antriebseinrichtung 50 ist es möglich, in Fig. 1 nicht dargestellte Antriebsstränge, die innerhalb der Rohrabschnitte 90a, 90b verlaufen, entlang ihrer Erstreckungsrichtung zu verlagern und diese somit in die Führungsschienen 70 hineinzuverlagern oder aus diesen herauszuziehen. Diese Antriebsstränge sind mit der Auszugsstange 64 gekoppelt, sodass diese Verlagerung der Antriebsstränge in den Führungsschienen auch zu einer Verlagerung der Auszugstange 64 und somit zu einem Abwickeln oder Aufwickeln des Flächengebildes 62 von der bzw. auf die Wickelwelle 60 führt.

Da das Flächengebilde 62 hinsichtlich seiner Materialeigenschaften bzw. seines Zuschnittes leichten Schwankungen unterliegen kann, die sich bei stets und für alle typgleichen Rollobaueinheiten identischer Beabstandung der Führungsschienen 70 durch die Gefahr eines Durchhängens des Flächengebildes 62 äußern könnte, ist vorgesehen, dass die Führungsschienen 70 in variablem Abstand zueinander bezogen auf die Querrichtung 2 am Rahmen 30a, 30b angebracht werden können. Hierdurch kann trotz verschiedener Materialeigenschaften und/oder Zuschnitte des Flächengebildes 62 bei verschiedenen Rollobaueinheiten des gleichen Typs eine übereinstimmende Anmutung erzielt werden.

Die variable Beabstandung in Querrichtung 2 beschränkt sich nicht nur auf die Führungsschienen 70, sondern betrifft auch die an den Führungsschienen 70 vorgesehenen Zuführabschnitte 80 sowie die Rohrabschnitte 90a, 90b.

Wie anhand der Fig. 1a zu ersehen ist, schließen sich die vorzugsweise als Kunststoffteile ausgebildeten Zuführabschnitte 80 unmittelbar an die vorzugsweise metallischen und vorzugsweise als Strangprofile ausgebildeten Führungsschienen 70 an. Dabei sind Verbindungsmittel 82 vorgesehen, mittels derer diese Verbindung zwischen den Zuführabschnitten 80 und den Führungsschienen 70 erzielt wird. Diese Verbindungsmittel bestehen bei der vorliegenden Gestaltung aus Steckabschnitten 82 an den Zuführabschnitten n 80, deren Formgebung an die Profilform der Führungsschienen 70 angepasst ist und die somit in Querrichtung eine formschlüssige Kopplung zwischen Zuführabschnitten 80 und den Führungsschienen 70 bewirken.

Wie Fig. 1b zeigt, erstrecken sich die Rohrabschnitte 90a, 90b von diesen Zuführabschnitten 80 zur Antriebseinrichtung 50, wo sie in ein aus zwei Halbschalen 52a, 52b der Antriebseinrichtung 50 bestehendes Gehäuse 52 eingesetzt sind.

Anhand der folgenden Figuren wird erläutert, wie die Rollobaugruppe ausgebildet ist, um eine einfache Anpassbarkeit der Positionierung der durch die variable Beabstandung der Führungsschienen 70 betroffenen Bauteile zu ermöglichen.

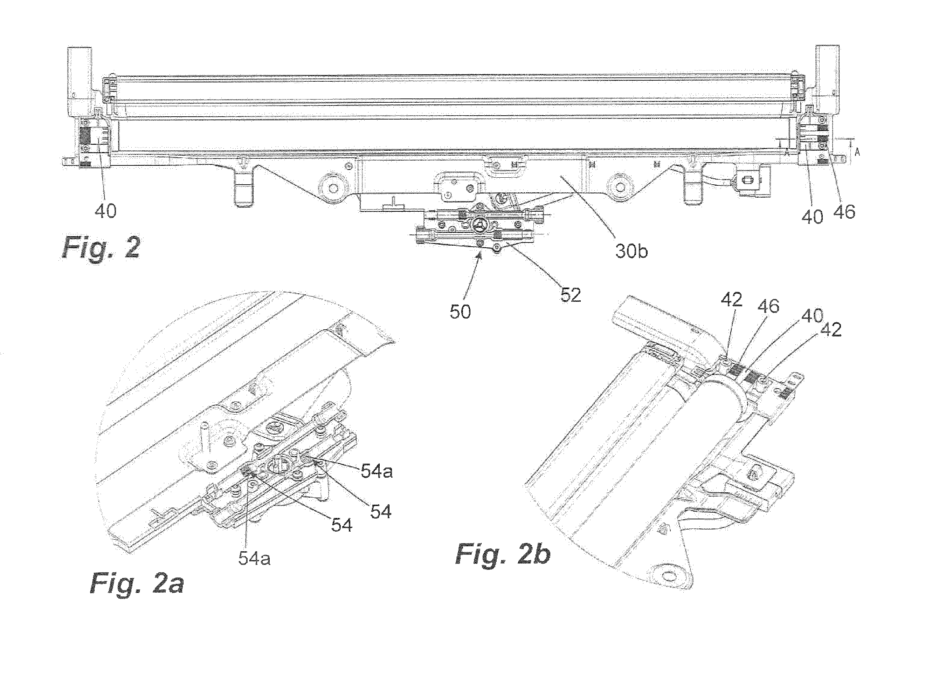

Die Fig. 2, 2a, 2b zeigen eine Basisbaugruppe, umfassend den Querträger 30b, die Antriebseinrichtung 50 sowie am Querträger 30b vorgesehene Lagerblöcke 40. Diese Bauteile sind relativ zueinander unveränderlich positioniert und werden nicht in Hinblick auf die Variabilität des Flächengebildes 62 angepasst. Wie Fig. 2a zeigt, sind jedoch am Gehäuse 52 der Antriebseinrichtung 50 als Rohraufnahmen ausgebildete Festlegungseinrichtungen 54 vorgesehen, die der Aufnahme der Rohrabschnitte 90a, 90b dienen und die jeweils über eine Vielzahl von quer zu ihrer Erstreckungsrichtung ausgerichteten umlaufenden Nuten 54a verfügen. Hierdurch kann in nachfolgend noch erläuterter Weise die Positionierung der Rohrabschnitte 90a, 90b verändert und anschließend festgelegt werden.

Zur Festlegung der Zuführabschnitte 80 in variabler Beabstandung sind an den Lagerblöcken 40 jeweils zwei Bohrungen 42 zur Aufnahme von Festlegungsschrauben vorgesehen. Zusätzlich sind an der Oberseite der Lagerblöcke 40 Rastleitern mit sich in Längsrichtung 4 erstreckenden und zueinander parallel angeordneten Raststegen 46 vorgesehen.

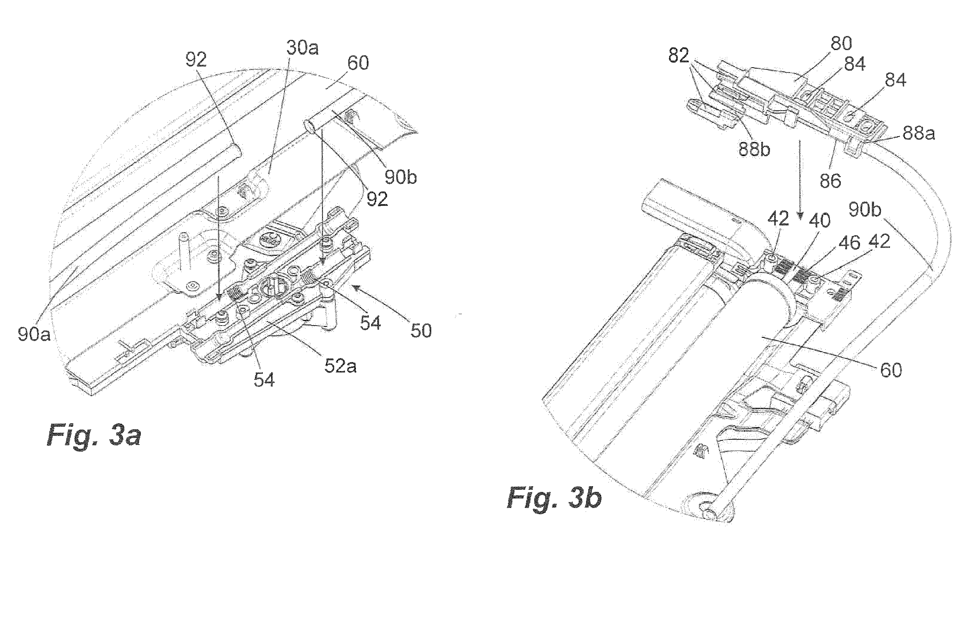

Ausgehend von der in Fig. 2 dargestellten Basisbaugruppe wird im Zuge der Montage für jede Führungsschiene 70 eine Unterbaugruppe zunächst provisorisch angebracht, die aus dem Zuführabschnitt 80 und dem damit bereits verbundenen Rohrabschnitt 90a bzw. 90b besteht. Wie Fig. 3a zeigt, wird dabei der jeweilige Rohrabschnitt 90a, 90b, der an seinem zur Antriebseinrichtung 50 hinweisenden Ende eine Aufweitung 92 aufweist, in die untere Halbschale 52a des Gehäuses 52 der Antriebseinrichtung 50 eingelegt. Gleichzeitig wird der jeweilige Zuführabschnitt 80 auf dem jeweiligen Lagerblock 40 positioniert, so dass am Zuführabschnitt 80 vorgesehen Langlöcher 84 mit den Bohrungen 42 am Lagerblock 40 fluchten. Dies ist in Fig. 3b dargestellt.

Sobald dies geschehen ist, wird die individuelle Anpassung der Rollobaueinheit 10 vorgenommen. Hierbei werden die in Fig. 3b nicht dargestellten Führungsschienen 70 in Querrichtung 2 so beabstandet, dass das Flächengebilde 62 in von der Wickelwelle 60 abgerolltem Zustand den gewünschten Grad an Durchhängen zeigt. Anschließend werden die Führungsschienen 70 im betreffenden Abstand am Rahmen 30a, 30b befestigt. Mit der beabstandeten Führungsschienen 70 geht auch eine Beabstandung der Zuführabschnitte 80 mit den daran vorgesehenen

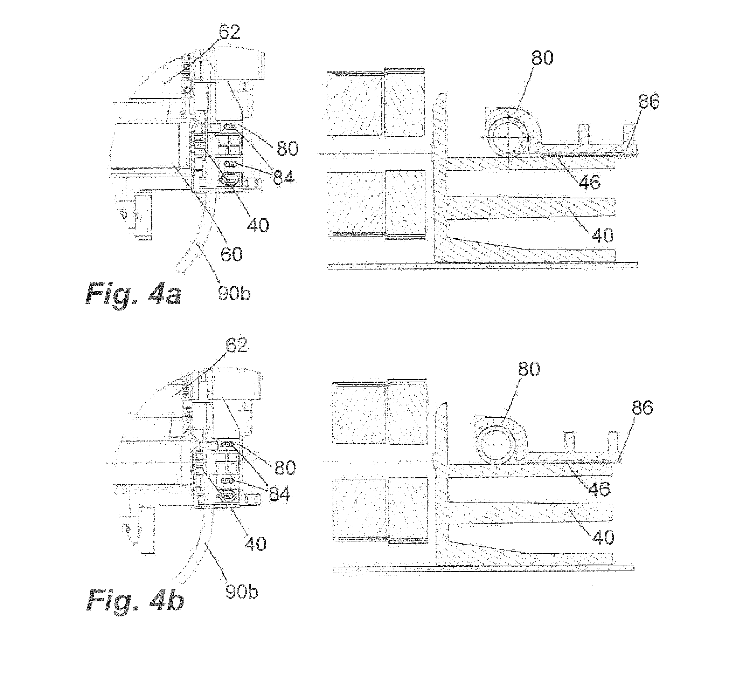

Einlaufbereichen 88a, 88b für den Antriebsstrang und das Gleitband einher wobei die Zuführabschnitte 80 über die Verbindungsmittel 82 bezogen auf die Querrichtung 2 formschlüssig mit den Führungsschienen 70 verbunden sind. Da jedoch die unmittelbare Verbindung zwischen den Zuführabschnitten 80 und den Führungsschienen 70 im Betrieb nicht ausreichen würde, um dauerhaft die gewünschte Positionierung des Zuführabschnitts 80 gewährleisten zu können und da deshalb Funktionsstörungen zu befürchten wären, werden die Zuführabschnitte 80 zusätzlich an den Lagerblöcken 40 gesichert. Dies erfolgt, indem die Zuführabschnitte 80 korrespondierend mit den Führungsschienen 70 in Querrichtung verschoben werden, wobei eine an der Unterseite der Zuführabschnitte 80 jeweils vorgesehene Verzahnung 86 in einer von vielen möglichen Stellen an der korrespondierenden Verzahnung 46 des Lagerblocks 40 positioniert wird. Die Fig. 4a und 4b verdeutlichen diese Positionierung, bei der die Zuführabschnitte 80 wie auch die Führungsschienen 70 in einer angepassten Position am Rahmen 30 befestigt werden, sobald das Flächengebilde 62 die gewünschte Spannung aufweist. Hierzu werden Schrauben durch die Langlöcher 84 der Zuführabschnitte 80 und in die Bohrungen 42 der Lagerblöcke 40 eingeschraubt, durch die die Relativlage zwischen den Zuführabschnitten 80 und den Lagerblöcken 40 dauerhaft fixiert wird. Zwar könnte unter Umständen alleine diese Verschraubung auch ohne die genannte Verzahnung 46, 86 ausreichen, um die Lagefixierung der Zuführabschnitte 80 zu gewährleisten. Durch die zusätzliche Verzahnung 46, 86 ist jedoch in besonders hohem Maße gewährleistet, dass der Zuführabschnitt 80 sich nicht in Folge einer Kraftbeaufschlagung beim Antreiben der Auszugstange 64 mittels des in den Rohrabschnitten 90a, 90b geführten Strangs um eine Hochachse verdreht.

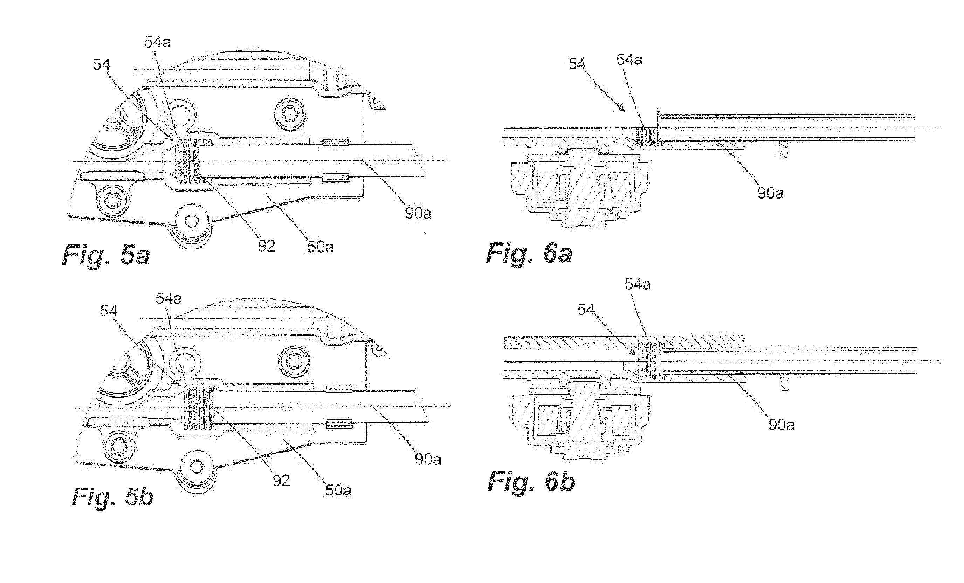

Während der Positionierung der Zuführabschnitte gegenüber den Lagerblöcken 40 sind die gegenüberliegenden innenseitigen Enden der Rohrabschnitte 90a, 90b mit den dort vorgesehenen Aufweitungen 92 noch nicht dauerhaft am Gehäuse 52 der Antriebseinrichtung 50 fixiert. Es ist daher noch möglich, die Aufweitung 92 gegenüber den jeweils um etwa 2 mm von einer beabstandeten Nuten 54a der Festlegungseinrichtungen 54 zu verlagern. Sobald die Zuführabschnitte 80 ihre endgültige Positionierung erhalten haben, kann jedoch die für den konkreten Einzelfall passende Nut 54a ausgewählt werden und die Aufweitung 92 am nach innenweisenden Ende der Rohrabschnitte 90a, 90b in diese jeweilige Nut eingefügt werden. Die Fig. 5a und 5b verdeutlichen dies.

Sobald dies geschehen ist, wird in der in Fig. 6a und 6b dargestellten Weise das Gehäuse 52 der Antriebseinrichtung 50 geschlossen, so dass das zur Antriebseinrichtung hinweisende Ende des Rohrabschnitts 90a bzw. 90b in der jeweiligen passenden Lage durch die umlaufenden Nuten an den Gehäuseabschnitten 50a, 50b dauerhaft formschlüssig gesichert ist.

Die erfindungsgemäße Rollobaueinheit gestattet somit eine Anpassung der Beabstandung ihrer Führungsschienen und insbesondere eine Realisierung der für einen einwandfreien Betrieb erforderlichen Folgeanpassungen in Hinblick auf die Zuführrohre und die Zuführabschnitte in besonders einfacher Art und Weise. Schwierigkeiten bei der Montage werden hierdurch vermieden.

## Patentansprüche

1. Rollobaueinheit (10) für ein Kraftfahrzeug mit
- einer drehbar gelagerten Wickelwelle (60),
- einem flexiblen Flächengebilde (62), welches in einer Staulage auf der Wickelwelle (60) aufgewickelt ist und zur Erreichung einer Funktionslage von der Wickelwelle in einer Längsrichtung (4) abwickelbar ist und welches an seinen Seitenkanten (62a, 62b) Gleitelemente aufweist,
- zwei in Längsrichtung (4) erstreckte Führungsschiene (70) zur Führung der an den Seitenkanten des Flächengebildes vorgesehenen Gleitelemente und
- einem Rahmen (30, 30a, 30b),
wobei die Führungsschienen (70) in variablem Querabstand am Rahmen (30, 30a, 30b) befestigbar sind, um hierdurch in einem gewünschten Abstand dauerhaft fixiert zu werden,
**dadurch gekennzeichnet, dass**
- ein starres Führungsrohr (90a, 90b) für einen darin geführten Antriebsstrang vom Rahmen (30, 30a, 30b) zur Führungsschiene (70) oder zu einem an der Führungsschiene ortsfesten Zuführabschnitt (80) verläuft und
- eine erste Festlegungseinrichtung (54) vorgesehen ist, mittels derer die Festlegung des rahmenseitigen Endes des Führungsrohrs (90a, 90b) ortsfest zum Rahmen (30, 30a, 30b) in variablen Stellungen bezogen auf die Querrichtung (2) möglich ist.

2. Rollobaueinheit (10) nach Anspruch 1,
**dadurch gekennzeichnet, dass**
am Rahmen eine Antriebseinrichtung (50) vorgesehen ist, die zur translativen Bewegung des Antriebsstrangs ausgebildet ist, welcher sich von der Antriebseinrichtung (50) bis in eine der Führungsschienen (70) erstreckt und mittels dessen das Flächengebilde (62) aus der Staustellung in die Funktionsstellung überführt werden kann, wobei das Führungsrohr (90a, 90b) von der Antriebseinrichtung (50) zur Führungsschiene (70) oder zu einem an der Führungsschiene ortsfesten Zuführabschnitt (80) verläuft und wobei die Festlegungseinrichtung (54) an dieser Antriebseinrichtung (50) vorgesehen ist.

3. Rollobaueinheit (10) nach Anspruch 1 oder 2,
**dadurch gekennzeichnet, dass**
die erste Festlegungseinrichtung (54) zur Festlegung des Führungsrohrs (90a, 90b) in einer von mehreren diskreten Stellungen (54a) ausgebildet ist.

4. Rollobaueinheit (10) nach Anspruch 3,
**dadurch gekennzeichnet, dass**
am rahmenseitigen Ende der Führungsrohrs (90a, 90b) eine Querschnittsänderung (92) vorgesehen ist und die Festlegungseinrichtung (54) als am Rahmen vorgesehene Rohraufnahme für das Führungsrohr (90a, 90b) ausgebildet ist, die eine Mehrzahl von voneinander in Querrichtung (2) beabstandeten Abschnitten (54a) mit an die Querschnittsänderung (92) angepasster Formgebung aufweist.

5. Rollobaueinheit (10) nach Anspruch 4,
**dadurch gekennzeichnet, dass**
die Rohraufnahme zwei Halbschalen (52a, 52b) zur Aufnahme des rahmenseitigen Endes des Führungsrohrs (90a, 90b) aufweist, wobei die Halbschalen (52a, 52b) das Führungsrohr im montierten Zustand umfänglich umgeben und wobei die Abschnitte (54a) mit an die Querschnittsänderung (92) angepasster Formgebung an einer oder an beiden Halbschalen (52a, 52b) vorgesehen sind.

6. Rollobaueinheit (10) nach Anspruch 5,
**dadurch gekennzeichnet, dass**
die Halbschalen (52a, 52b) bzw. Gehäuseteile, an denen die Halbschalen vorgesehen sind, Verbindungsmittel zur Herstellung einer werkzeuglos unlösbare Schnappverbindung aufweisen.

7. Rollobaueinheit (10) nach einem der vorstehenden Ansprüche **dadurch gekennzeichnet, dass**
den Führungsschienen (70) jeweils ein als separates Bauteil vorgesehener Zuführabschnitt (80) zugeordnet ist, wobei die Zuführabschnitte (80) jeweils eine Einlauföffnung für die Gleitelemente und/oder eine Einlauföffnung für den Antriebsstrang aufweisen, wobei die Zuführabschnitte (80) derart mit den Führungsschienen (70) verbunden sind, dass sie gemeinsam mit den Führungsschienen (70) gegeneinander einen variablen Querabstand einnehmen und wobei zusammenwirkende zweite Festlegungsmittel (42, 84, 46, 86) am Zuführabschnitt (80) und am Rahmen (30, 40) vorgesehen sind, die eine Fixierung der Zuführabschnitte (80) in variabler Position am Rahmen (30, 40) gestatten und dabei eine Verdrehsicherung der Zuführabschnitte (80) gegenüber dem Rahmen (30, 40) bewirken.

8. Rollobaueinheit (10) nach dem Oberbegriff von Anspruch 1,
**dadurch gekennzeichnet, dass**
den Führungsschienen (70) jeweils ein als separates Bauteil vorgesehener Zuführabschnitt (80) zugeordnet ist, wobei die Zuführabschnitte (80) jeweils eine Einlauföffnung für die Gleitelemente und/oder eine Einlauföffnung für den Antriebsstrang aufweisen, wobei die Zuführabschnitte (80) derart mit den Führungsschienen (70) verbunden sind, dass sie gemeinsam mit den Führungsschienen (70) gegeneinander einen variablen Querabstand einnehmen und wobei zusammenwirkende zweite Festlegungsmittel (42, 84, 46, 86) am Zuführabschnitt (80) und am Rahmen (30, 40) vorgesehen sind, die eine Fixierung der Zuführabschnitte (80) in variabler Position am Rahmen (30, 40) gestatten und dabei eine Verdrehsicherung der Zuführabschnitte (80) gegenüber dem Rahmen (30, 40) bewirken.

9. Rollobaueinheit nach Anspruch 7 oder 8,
**dadurch gekennzeichnet, dass**
die zweiten Festlegungsmittel (84) Langlöcher am Zuführabschnitt (80) oder am Rahmen umfassen.

10. Rollobaueinheit nach einem der Ansprüche 7 bis 9,
**dadurch gekennzeichnet, dass**
die zweiten Festlegungsmittel vorzugsweise in Längsrichtung erstreckte Rastrippen (86) am Zuführabschnitt (80) aufweisen, in die korrespondierende vorzugsweise in Längsrichtung erstreckte Rastrippen (46) des Rahmens (30, 40) eingreifen.

11. Fahrzeug mit einem Rollo,
**dadurch gekennzeichnet, dass**
das Fahrzeug eine Rollobaueinheit nach einem der vorstehenden Ansprüche aufweist.
